# EUROPEAN PATENT APPLICATION

(11) **EP 4 087 149 A1**
(43) Date of publication of application: **09.11.2022**
(21) Application number: 20911794.4
(22) Date of filing: 07.01.2020
(51) Int. Cl.: H04B 7/04, H04W 72/04

(54) **BEAM SELECTION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Mewburn Ellis LLP
(86) International application number: PCT/CN2020/070758
(87) International publication number: WO 2021/138816

(57) **Abstract**

This application relates to a method for beam selection, a terminal device, and a network device. The method for beam selection is applicable to a terminal device and specifically includes the following. The terminal device transmits first information to a network device according to a current channel condition after the terminal device transmits beam correspondence capability information to the network device. The first information is used for the network device to determine current beam correspondence capability of the terminal device. According to embodiments of the disclosure, actual beam correspondence capability of the terminal device can be determined, the network device can assist in beam selection when necessary, thereby keeping the system performance unaffected.

## Description

### TECHNICAL FIELD

This application relates to the field of communications, and more particularly, to a method for beam selection, a terminal device, and a network device.

### BACKGROUND

In the art, in a frequency band with high frequency, such as a millimeter-wave band, a terminal device and a base station communicate in a narrow beam-based manner. During operation, the narrower the beam, the more concentrated the transmitted energy, and the higher the beamforming gain, which can make up for a defect of a large space propagation loss in a high-frequency band to a certain extent, but also brings a new problem. The terminal device and the base station need to select an optimal beam pair from a large number of candidate beams. In theory, assuming that there are *M* available beams at terminal device side and *N* available beams at base station side, the number of potential beam pairs is *M*×*N.*

In practical application, the terminal device and the base station sweep on a beam-by-beam basis to determine the optimal beam pair, which takes too long and brings a challenge to service continuity. In application, it is found that the problem is particularly obvious in selection of transmit beam of the terminal.

### SUMMARY

In view of this, a method for beam selection, a terminal device, and a network device are provided in embodiments of the disclosure. The network device can provide auxiliary beam sweeping to the terminal device according to a channel environment condition of the terminal device, which can improve a mechanism of terminal transmit beam selection.

A method for beam selection is provided in embodiments of the disclosure. The method is applicable to a terminal device and includes the following. The terminal device transmits first information to a network device according to a current channel condition after the terminal device transmits beam correspondence capability information to the network device. The first information is used for the network device to determine current beam correspondence capability of the terminal device.

A method for beam selection is also provided in embodiments of the disclosure. The method is applicable to a network device and includes the following. The network device receives first information from a terminal device after receiving beam correspondence capability information reported by the terminal device. The network device determines current beam correspondence capability of the terminal device according to the first information.

A terminal device is also provided in embodiments of the disclosure. The terminal device includes an information transmitting module. The information transmitting module is configured to: transmit first information to a network device according to a current channel condition after the terminal device transmits beam correspondence capability information to the network device. The first information is used for the network device to determine current beam correspondence capability of the terminal device.

A network device is also provided in embodiments of the disclosure. The network device includes an information receiving module and beam correspondence capability determination module. The information receiving module is configured to: receive first information from a terminal device after the network device receives beam correspondence capability information transmitted by the terminal device. The beam correspondence capability determination module is configured to: determine current beam correspondence capability of the terminal device according to the first information.

A terminal device is also provided in embodiments of the disclosure. The terminal device includes a processor and a memory. The memory is configured to store computer programs. The processor is configured to invoke and execute the computer programs stored in the memory, to perform the method for beam selection described above.

A network device is also provided in embodiments of the disclosure. The network device includes a processor and a memory. The memory is configured to store computer programs. The processor is configured to invoke and execute the computer programs stored in the memory, to perform the method for beam selection described above.

A chip is also provided in embodiments of the disclosure. The chip is configured to implement the method for beam selection described above. Specifically, the chip includes a processor configured to invoke and execute computer programs stored in a memory, to cause a device equipped with the chip to perform the method for beam selection described above.

A computer-readable storage medium is also provided in embodiments of the disclosure. The computer-readable storage medium is configured to store computer programs which are operable with a computer to perform the method for beam selection described above.

A computer program is also provided in embodiments of the disclosure. When executed on a computer, the computer program causes the computer to perform the method for beam selection described above.

According to embodiments of the disclosure, the terminal device not only reports its beam correspondence capability information during initial access, but also transmits additional information to the network device according to a current channel environment condition, so that the network device can determine actual beam correspondence capability of the terminal device and assist the terminal device in beam selection when necessary, thereby keeping the system performance unaffected.

### BRIEF DESCRIPTION OF THE DRAWINGS

FIG. 1 is a schematic diagram of an application scenario of embodiments of the disclosure.
FIG. 2 is a schematic diagram of a beam distribution effect between a network device and a terminal device according to an embodiment of the disclosure.
FIG. 3 is a flowchart of a method for beam selection implemented at terminal device side according to embodiments of the disclosure.
FIG. 4 is a flowchart of a method for beam selection implemented at network device side according to embodiments of the disclosure.
FIG. 5 is a flowchart of an embodiment of transmitting first information to a network device by a terminal device according to an embodiment of the disclosure.
FIG. 6 is a schematic structural block diagram of a terminal device according to an embodiment of the disclosure.
FIG. 7 is a schematic structural block diagram of a terminal device according to another embodiment of the disclosure.
FIG. 8 is a schematic structural block diagram of a network device according to an embodiment of the disclosure.
FIG. 9 is a schematic structural block diagram of a network device according to another embodiment of the disclosure.
FIG. 10 is a schematic block diagram of a communication device according to embodiments of the disclosure.
FIG. 11 is a schematic block diagram of a chip according to embodiments of the disclosure.
FIG. 12 is a schematic block diagram of a communication system according to embodiments of the disclosure.

### DETAILED DESCRIPTION

The following will describe technical solutions of embodiments with reference to the accompanying drawings.

The technical solutions of embodiments of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a universal mobile telecommunication system (UMTS), a wireless local area networks (WLAN), a wireless fidelity (WiFi), a 5^{th}-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication. Embodiments herein can also be applied to these communication systems.

Optionally, a communication system in embodiments of the disclosure may be applied to a carrier aggregation (CA) scenario, a dual connectivity (DC) scenario, or a standalone (SA) network deployment scenario.

Embodiments of the disclosure have been described in connection with the network device and the terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device. The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

By way of example rather than limitation, according to embodiments, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

The network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a g-Node B (gNB) in the NR network, a network device in the future evolved PLMN, or the like.

In embodiments of the disclosure, the network device provides services for a cell, and the terminal device communicates with the network device through a transmission resource (for example, a frequency domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

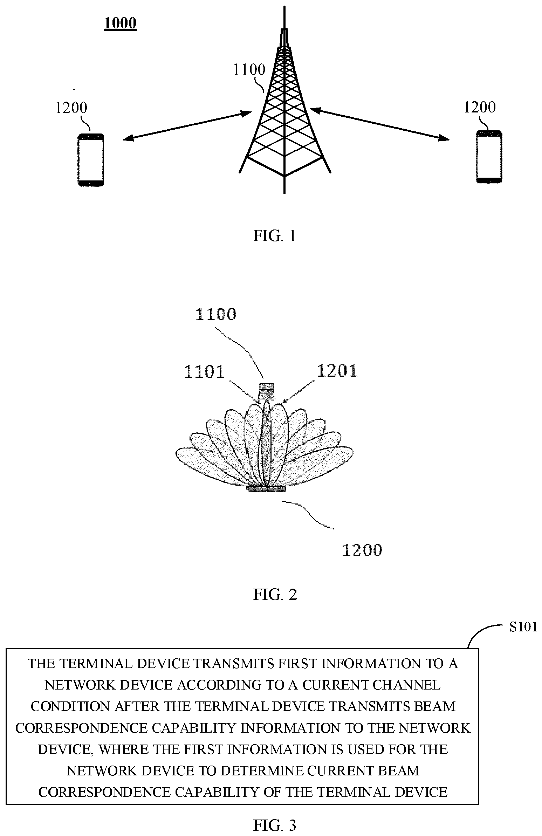

FIG. 1 schematically illustrates one network device 1100 and two terminal devices 1200. Optionally, a wireless communication system 1000 may include multiple network devices 1100, and there may be other numbers terminal devices in a coverage of each of the network devices 1100, which is not limited in herein.

Optionally, the wireless communication system 1000 illustrated in FIG. 1 may further include other network entities such as a mobility management entity (MME), an access and mobility management function (AMF), or the like, which is not limited herein.

It should be understood that, the terms "system" and "network" herein are usually interchangeable. The term "and/or" herein describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

In order to clearly illustrate an idea of embodiments of the disclosure, technical contents involved in embodiments of the disclosure will be introduced and described below.

Generally, a terminal selects a receive beam as follows. When a downlink (DL) beam of a base station is fixed, the terminal measures a strength of the DL beam by using each of receive beams respectively and selects an optimal receive beam from the receive beams for use in pair with the DL beam of the base station. FIG. 2 schematically illustrates a schematic diagram of a beam distribution effect between the network device 1100 and the terminal device 1200, where a DL transmit beam 1101 at base station side and a DL receive beam 1201 at terminal side are an optimal pair of working beams.

In embodiments of the disclosure, first, beam correspondence capability of a terminal device refers to that the terminal device can select an uplink (UL) transmit beam based on beam correspondence, and specifically refers to that after selecting a DL receive beam, the terminal device can use the selected DL receive beam as the UL transmit beam. Therefore, whether the UL transmit beam determined according to the beam correspondence is an optimal transmit beam actually depends on whether the DL receive beam is optimal.

Selection of the DL receive beam by the terminal device will be described in detail below.

The DL receive beam of the terminal device is determined based on measurement of DL signal strength or DL signal quality. Specifically, on the one hand, when the channel environment condition is good, for example, high signal strength and less interference, measurement accuracy of a DL signal by the terminal is high, and thus selection accuracy of a DL receive beam is high.

On the other hand, when the channel environment condition is poor, for example, low signal strength and more interference, the measurement accuracy of the DL signal by the terminal is low, and thus the selection accuracy of the DL receive beam is low and therefore, the DL receive beam determined may not be an optimal beam. In this case, if the UL transmit beam is still determined according to the beam correspondence, which means that the current DL receive beam will be directly used as the UL transmit beam, the UL transmit beam may not be the optimal beam, which may eventually degrade the overall performance of the terminal device.

Second, at present, although the beam correspondence capability of the terminal is a capability that most terminals need to have, the capability is different and needs to be distinguished according to embodiments. The capability mainly includes the following two types.

### Type 1. Complete beam correspondence capability

Under a predefined channel condition, the UL transmit beam selected by the terminal device according to the beam correspondence can meet a predefined transmit beam peak strength (e.g., a peak equivalent isotropic radiated power (EIRP)) requirement and a spherical coverage requirement. The predefined channel environment condition can be set based on a signal to interference plus noise ratio (SINR) of a DL signal. For example, the SINR of the DL signal is set to be SINR ≥*X* dB, where *X* can be a preset value specified by a communication system of the terminal device and the network device, for example, *X* = 6.

In practical application, when the above requirement or indicator is met, that is, the SINR of the DL signal is greater than or equal to *X* dB, i.e., SINR≥*X* dB, the UL transmit beam selected by the terminal device according to the beam correspondence can meet the transmit beam peak strength requirement and the spherical coverage requirement, which means that the UL transmit beam selected by the terminal device according to the beam correspondence can meet a requirement for the terminal to access the network. In this case, the terminal is considered to have "complete beam correspondence capability".

On the contrary, if the above indicator cannot be met, the transmit beam selected by the terminal according to the beam correspondence cannot meet the requirement for the terminal to access the network, and the terminal is considered to have a second type of beam correspondence capability, which is specifically as follows.

### Type 2. Partial beam correspondence capability

Under a predefined channel condition, such as SINR≥*X* dB, the UL transmit beam selected by the terminal device according to the beam correspondence cannot meet the predefined transmit beam peak strength requirement and the spherical coverage requirement.

Different from "complete beam correspondence capability", if the above indicator cannot be met, although the terminal can select a UL transmit beam according to the beam correspondence, the selected UL transmit beam cannot meet the requirement for the terminal to access the network. Therefore, in this case, the terminal can sometimes be considered to have "partial beam correspondence capability".

Third, during initial access to the network, the terminal device will report its beam correspondence capability to the network device. Specifically, the beam correspondence capability can be reported to the network device via terminal capability signaling. The capability signaling contains a first field. When the first field has a first preset value, it indicates that the terminal device has "complete beam correspondence capability", and when the first field has a second preset value, it indicates that the terminal device has "partial beam correspondence capability". In an embodiment, the first field can be "Beam Correspondence Without UL-Beam Sweeping" (which can be understood as beam correspondence capability without UL beam sweeping). If the value of this field is 1, it indicates that the terminal device has "complete beam correspondence capability". If the value of this field is 0, it indicates that the terminal device has "partial beam correspondence capability". It should be noted here that, beam correspondence capability reported by most terminal devices during initial access to the network is usually set before leaving the factory. Therefore, during initial access to the network, most terminal devices directly report the beam correspondence capability set at the factory.

It is noted that, regardless of complete beam correspondence capability or partial beam correspondence capability, what the terminal device reports to the network device is beam correspondence capability under a predefined channel environment condition, such as beam correspondence capability when the SINR of the DL signal is greater than or equal to *X* dB, i.e., SINR≥*X* dB.

However, in practical application, a channel environment condition of the terminal in the network changes, and an actual SINR may become larger or smaller, so actual beam correspondence capability also changes. However, in this case, the base station does not know the change in the beam correspondence capability of the terminal device, which may cause many other problems. The following is an example for comparison.

### I. For a terminal with complete beam correspondence capability

1. Under a good channel condition, such as SINR≥*X* dB, the SINR is high, and measurement accuracy of the DL signal strength or signal quality measured with a terminal receive beam is high. In this case, the selected receive beam is optimal, and then a transmit beam obtained according to the beam correspondence is optimal.
2. Under a poor channel condition, such as SINR<*Y* dB, where *Y*≤*X*, the measurement accuracy of the DL signal strength or signal quality measured with the terminal receive beam is poor, so that the terminal may not be able to obtain an optimal receive beam through measurement. As a result, the transmit beam may not meet the requirement for the terminal to access the network.
3. In addition, in some cases, even SINR<*X* dB, although the predefined channel condition is not met, the terminal may still have good beam correspondence, but the network side does not know this. In this case, if the base station starts auxiliary beam sweeping, there will be a waste of network resources.

### II. For a terminal with partial beam correspondence capability

1. Under a good channel condition, such as SINR≥*X* dB, a beam selected by the terminal autonomously according to the beam correspondence may not be optimal, and the terminal is of poor performance.
2. Under a better channel condition, such as SINR≥*Z* dB, where *Z*>*X*, with an improvement of the measurement accuracy of receive beam strength by the terminal, the terminal may select a good enough transmit beam according to the beam correspondence without auxiliary beam sweeping by the base station.

That is, for a terminal with partial beam correspondence capability, when SINR>*Z* dB, complete beam correspondence may be achieved, so that an optimal transmit beam may be autonomously selected. In this case, if the base station still performs auxiliary beam sweeping, there will be a waste of network resources.

To this end, a method for beam selection is provided in embodiments of the disclosure. The method is applicable to a terminal device. Referring to FIG. 3, the method includes the following.

S101, the terminal device transmits first information to a network device according to a current channel condition after the terminal device transmits beam correspondence capability information to the network device, where the first information is used for the network device to determine current beam correspondence capability of the terminal device.

First, as described above, during initial access to the network, the terminal device reports its beam correspondence capability to the network device. Second, according to embodiments of the disclosure, after accessing the network, the terminal device further transmits the first information to the network device according to the current channel environment condition, where the first information is used for the network device to determine the current beam correspondence capability of the terminal device.

The first information is reported according to the current channel environment condition, so the difference in the first information can reflect quality of the current channel environment condition of the terminal device and capability of the terminal device to accurately measure DL signal strength or quality, and can directly or indirectly indicate the current beam correspondence capability of the terminal device. Reporting the first information to the network device can solve a problem that the network device cannot learn the change in the beam correspondence capability of the terminal device.

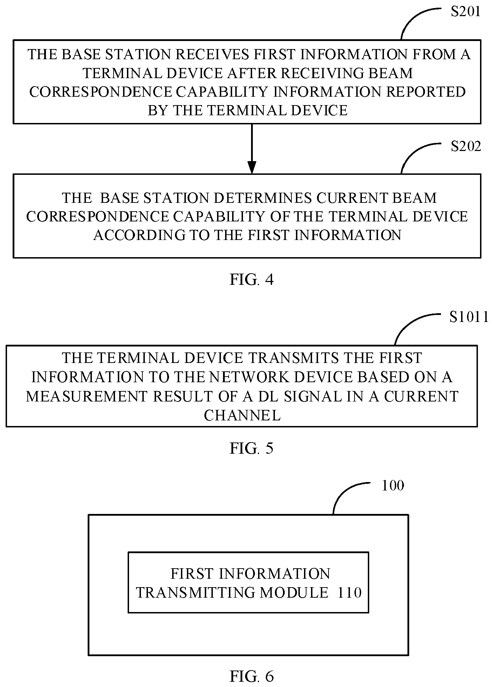

Correspondingly, a method for beam selection is also provided in embodiments of the disclosure. The method is applicable to a network device. Referring to FIG. 4, the method includes the following.

S201, the network device receives first information from a terminal device after the network device receives beam correspondence capability information reported by the terminal device.

S202, the network device determines current beam correspondence capability of the terminal device according to the first information.

According to embodiments of the disclosure, the network device receives not only the beam correspondence capability information reported by the terminal device during initial access, but also the first information transmitted by the terminal device after the terminal device accesses the network. The network device can determine the current beam correspondence capability of the terminal device according to the first information.

In embodiments of the disclosure, after obtaining the current beam correspondence capability of the terminal device, the network device can assist the terminal device in beam selection as a supplement to beam selection capability of the terminal device when necessary, which generally improves the beam selection capability of the terminal device.

Implementations of a basic idea of the disclosure will be described in conjunction with multiple embodiments in detail below.

In embodiments of the disclosure, referring to FIG. 5, the terminal device may transmit the first information to the network device according to the current channel environment condition as follows.

S1011, the terminal device transmits the first information to the network device based on a measurement result of a DL signal in a current channel.

In embodiments of the disclosure, the terminal device may measure the DL signal, for example, measure an SINR of the DL signal, to obtain the current SINR value of the DL signal.

Then, when transmitting the first information to the network device, for terminal devices with different initial beam correspondence capabilities, in embodiments of the disclosure, the first information can be configured in various implementations, which will be described in detail below.

For a terminal device initially with complete beam correspondence capability

The terminal reports its beam correspondence capability during initial access to the network. When the beam correspondence capability is complete correspondence capability, the network defaults that the terminal can select an optimal transmit beam according to beam correspondence. In practice, as described above, the terminal is unable to accurately select a corresponding transmit beam under all channel conditions. Therefore, the terminal reports the first information according to an actual channel condition to notify the base station whether its current actual beam correspondence is applicable. In different implementations, the specific content of the first information is different.

### Embodiment 1

In the art, an SINR value may be pre-stored in the terminal device, and the SINR value is a DL signal SINR threshold above which the terminal device can accurately measure DL signal strength or signal quality. The SINR value may be an SINR value obtained by measuring a synchronization signal and physical downlink shared channel block (SSB) transmitted from network side, an SINR value obtained by measuring a channel state information reference signal (CSI-RS), an average of the two SINR values, i.e., an average of a first SINR value obtained by measuring the SSB and a second SINR value obtained by measuring the CSI-RS SINR, or a weighted average of the first SINR value and the second SINR value, where weights of the two SINR values can be set according to an actual situation.

In this embodiment, the SINR value pre-stored in the terminal device is denoted as SINR₀. When the SINR of the DL signal is greater than or equal to the pre-stored SINR₀, the terminal device can accurately measure the DL signal strength or signal quality with high measurement accuracy, and the actual beam correspondence capability of the terminal is consistent with the complete beam correspondence capability initially reported by the terminal.

In this embodiment, the terminal can obtain the current SINR value of the DL signal by measuring the DL signal.

In addition, when the SINR is less than a first reference value, the terminal device transmits a first request to the network device. The first reference value may be pre-configured by the terminal or the network, or set in this embodiment as aforementioned SINR₀ or *X.*

Specifically, the terminal measures the DL signal under the current channel condition. If a current SINR value of the DL signal is less than SINR₀ above which the terminal device can accurately measure the DL signal, that is, the current SINR<SINR₀, it indicates that the terminal device actually has low measurement accuracy, and only has partial beam selection capability, which is inconsistent with the complete beam correspondence capability initially reported.

In this case, the terminal device transmits the first information to the network device, where the first information includes a first request for requesting the network device to start assisting the terminal device in transmit beam selection.

The first request can be regarded as a "network-assisted beam selection indication". When receiving the "network-assisted beam selection indication", the network device may assist the terminal device in optimal transmit beam selection.

In an implementation of the disclosure, a specific interaction process can be implemented as follows.
1. The terminal measures the SINR of the DL signal under the current channel condition. When the SINR<SINR₀, the terminal reports the "network-assisted beam selection indication" to the base station to request the base station to start assisting the terminal device in beam selection.
   In other embodiments of the disclosure, if the measured SINR of the DL signal is less than *X* dB, i.e., SINR<*X* dB, it indicates that the terminal currently has low measurement accuracy, and the actual beam selection capability is inconsistent with the complete beam selection capability initially reported. Similarly, the terminal needs to report the "network-assisted beam selection indication" to the base station to request the base station to start assisting the terminal device in beam selection.
   In addition, in some embodiments of the disclosure, the terminal at this stage may further report second information to the base station according to the number of transmit beams of the terminal device, where the second information includes the amount of sounding reference signal (SRS) resources required by the terminal, in preparation for subsequent beam selection.
2. After receiving the first information reported by the terminal, the base station can determine that the terminal currently has partial beam correspondence capability and is unable to select an optimal transmit beam. Therefore, the base station configures a certain amount of SRS signal resources for the terminal to assist the terminal in beam selection. If the base station receives from the terminal the second information, i.e., SRS amount request information, the base station can configure a corresponding amount of SRS resources to allocate to the terminal. The SRS resources configured by the base station for the terminal include at least one of: a subcarrier used to carry an SRS, an orthogonal frequency division multiplexing (OFDM) symbol used to carry an SRS, a time domain resource for an SRS, a frequency domain resource for an SRS, a time domain resource and a frequency domain resource used to carry an SRS.
3. After receiving the certain amount of SRS signal resources configured by the base station, the terminal transmits an SRS signal on a corresponding number of available transmit beams in sequence by using the SRS signal resources.
4. The base station measures SRS signal strength or signal quality corresponding to each of the transmit beams and selects an optimal beam from the transmit beams to feed back to the terminal, the optimal beam selected is the optimal transmit beam of the terminal.
5. After receiving optimal transmit beam information fed back by the base station, the terminal can transmit a signal with the beam.

In the above process, the terminal can request auxiliary beam selection from the base station when the current beam correspondence capability is inconsistent with the beam correspondence capability initially reported, so that the terminal can transmit a signal with the optimal transmit beam, thereby keeping the terminal performance unaffected.

Then, the terminal can continue to measure the DL signal. When the SINR of the DL signal measured by the terminal is greater than or equal to SINR₀, i.e., SINR≥SINR₀, it indicates that the terminal currently has complete beam correspondence capability, and the terminal may transmit the first information to the network device, where the first information includes a second request, and the second request is used to request the network device to stop assisting the terminal device in beam selection. Similarly, if the measured SINR of the DL signal is greater than or equal to *X* dB, i.e., SINR≥*X* dB, it indicates that the terminal currently has complete beam correspondence capability, and the terminal may transmit the first information containing the second request to the network device.

In embodiments of the disclosure, the second request can be regarded as a "network-assisted beam selection release indication". When receiving the release indication, the base station may determine that the terminal currently has complete beam correspondence capability and can autonomously select an optimal transmit beam, and the base station no longer assists the terminal in transmit beam selection. Therefore, there is no resource waste. The terminal subsequently makes transmit beam selection based on its complete beam correspondence, and the terminal performance is unaffected.

### Embodiment 2

In this embodiment, the first information includes an SINR of the DL signal measured in current channel environment, and the terminal reports the first information to the base station. The base station determines current beam correspondence capability of the terminal based on whether the received SINR value satisfies SINR≥*X* dB.

Specifically, for a terminal with complete beam correspondence, when the SINR reported by the terminal is greater than or equal to *X* dB, i.e., SINR≥*X* dB, the base station determines that the beam correspondence capability of the terminal is consistent with capability information reported by the terminal, that is, the terminal can achieve complete beam correspondence and autonomously select an optimal transmit beam.

On the contrary, when the SINR reported by the terminal is less than *X* dB, i.e., SINR <*X* dB, the base station determines that the terminal cannot achieve complete beam correspondence, and thus starts an auxiliary process to help the terminal select the optimal transmit beam. If the terminal has reported to the base station information on the number of SRSs required for auxiliary transmit beam selection, the base station can configure a corresponding amount of SRS resources for the terminal. If the terminal has not reported the number of SRSs required for auxiliary beam selection, the base station may configure as needed.

Then, the terminal transmits an SRS on multiple transmit beams, and the base station measures the signal, determines an optimal beam, and notifies the optimal beam to the terminal. For the specific process, reference can be made to operations 3, 4, and 5 in embodiment 1.

Based on the above embodiment, the terminal can transmit the SINR of the DL signal measured in the current channel environment condition to the base station, and the base station determines whether the current beam correspondence capability of the terminal is compatible with the complete beam correspondence capability initially reported. If the current beam correspondence capability of the terminal is not compatible with the complete beam correspondence capability initially reported, the base station can assist the terminal in beam selection, so that under a poor channel environment condition, the terminal can still transmit a signal with the optimal transmit beam, thereby keeping the terminal performance unaffected.

### Embodiment 3

In this embodiment, the first information includes an SINR of the DL signal measured in current channel environment and SINR₀ pre-stored in the terminal. The terminal reports the first information to the base station. The base station determines whether the received SINR and SINR₀ satisfy SINR≥SINR₀, so as to determine the current beam correspondence capability of the terminal.

Specifically, for a terminal with complete beam correspondence, if SINR≥SINR₀, it indicates that the terminal can autonomously select an optimal transmit beam, and the base station determines that the current beam correspondence capability of the terminal is compatible with the beam correspondence capability initially reported, i.e., is complete beam correspondence capability, and there is no need for auxiliary beam selection.

On the contrary, if SINR<SINR₀, it indicates that the terminal is unable to autonomously select the optimal transmit beam, and the base station determines that the current beam correspondence capability of the terminal is not compatible with the beam correspondence capability initially reported and the terminal currently has partial beam correspondence capability actually and requires auxiliary beam selection.

For a case where the terminal requires auxiliary beam selection, reference can be made to operations 3, 4, and 5 in embodiment 1, to complete an auxiliary process of the base station to the terminal.

Based on the above embodiment, the terminal can transmit to the base station not only the SINR of the DL signal measured in the current channel environment condition, but also SINR₀ pre-stored in the terminal, and the base station determines whether the current beam correspondence capability of the terminal is compatible with the beam correspondence capability initially reported based on the two SINRs. If not the current beam correspondence capability of the terminal is not compatible with the beam correspondence capability initially reported, the base station can assist the terminal in beam selection, so that the terminal can transmit a signal with the optimal transmit beam, thereby keeping the terminal performance unaffected.

For a terminal device initially with partial beam correspondence capability

For a terminal with partial beam correspondence, under a predefined condition where the SINR of the DL signal is greater than or equal to *X* dB, i.e., SINR≥*X* dB, a beam selected by the terminal autonomously may not be the optimal beam, which may lead to poor performance. Embodiments of the disclosure considers that, in an environment condition of high signal-to-noise ratio (SNR), for example, SINR≥*Y* dB, and *Y*>*X,* with an improvement of the measurement accuracy of beam strength by the terminal, the terminal may select a good enough transmit beam. In this case, there is no need for auxiliary beam sweeping by the base station. However, according to an existing regulation, the base station provides auxiliary beam sweeping indiscriminately to terminals with partial beam correspondence, which wastes air interface resources and thus causes system delay. Therefore, for a terminal with partial beam correspondence, embodiments of the disclosure adopt various processing methods as optimization solutions, which are specifically described as follows.

### Embodiment 4

In this embodiment, an SINR pre-stored in the terminal device, i.e., a DL signal SINR threshold above which the terminal device can accurately measure DL signal strength or signal quality is denoted as SINR₁, and a process of determining SINR₁ is similar to the aforementioned process of determining SINR₀.

In this embodiment, based on foregoing operations at S1011 and S1012, the terminal can obtain a current SINR value of the DL signal by measuring the DL signal.

In addition, when the SINR is greater than or equal to a second reference value, the terminal device transmits a third request to the network device, where the second reference value may be pre-configured by the terminal or configured by the network. In this embodiment, the second reference value can be set as aforementioned SINR₁ or *X.*

Specifically, the terminal measures the DL signal under the current channel environment condition. If the current SINR of the DL signal is greater than or equal to SINR₁ above which the terminal can accurately measure the DL signal, that is, the current SINR≥ SINR₁, it indicates that under the current channel environment condition, the terminal device actually has high enough measurement accuracy, so the terminal actually has complete beam selection capability, which is inconsistent with the partial beam correspondence capability initially reported.

In this case, the terminal device transmits the first information to the network device. In this embodiment, the first information includes a third request for requesting the network device to stop assisting the terminal device in transmit beam selection.

The third request can be regarded as a "network-assisted beam selection release indication". After receiving the release indication, the network device determines that the terminal currently has complete beam selection capability and can select a transmit beam based on the beam correspondence capability, and the base station no longer helps the terminal device select the optimal transmit beam.

In an implementation of the disclosure, a specific interaction process can be implemented as follows.
1. The terminal measures the SINR of the DL signal. When the SINR≥SINR₁, the terminal reports to the base station the third request, i.e., the "network-assisted beam selection release indication".
2. After receiving the release indication reported by the terminal, the base station will no longer measure a transmit beam of the terminal, nor feed optimal beam selection back.
3. The terminal autonomously selects the transmit beam based on the current complete beam correspondence.
4. Then, when the SINR of the DL signal measured by the terminal is less than SINR₁, i.e., SINR< SINR₁, the terminal reports to the base station a fourth request, i.e., a "network-assisted beam selection indication". In addition, the terminal can also report the amount of required SRS resources to the base station according to the number of transmit beams.
5. The base station configures SRS resources for the terminal after receiving the "network-assisted beam selection indication". If the terminal has reported to the base station information on the number of SRSs required for auxiliary transmit beam selection, the base station can configure a corresponding amount of SRS resources to the terminal. If the terminal has not reported the number of SRSs required for auxiliary beam selection, the base station may configure as needed.
6. The terminal transmits an SRS signal on a corresponding number of transmit beams by using the SRS resources.
7. The base station measures quality of the SRS signal and select an optimal beam.

In the above process, the terminal can request the base station to release the auxiliary beam selection when the current beam correspondence capability is inconsistent with the partial beam correspondence capability initially reported, thereby ensuring that the terminal can select the optimal transmit beam to transmit a signal with the terminal performance unaffected, saving network resources to the maximum extent, and reducing occurrence of network delay.

### Embodiment 5

In this embodiment, the first information includes an SINR of the DL signal measured in current channel environment and SINR₁ pre-stored in the terminal. The terminal reports the first information to the base station. The base station determines whether the received SINR and SINR₁ satisfy SINR≥SINR₁, so as to determine the current beam correspondence capability of the terminal.

Specifically, for a terminal with partial beam correspondence, when the SINR reported by the terminal is greater than or equal to SINR₁, i.e., SINR≥SINR₁, the base station can determine that the terminal can achieve complete beam correspondence and autonomously select an optimal transmit beam.

On the contrary, if the SINR reported by the terminal is less than SINR₁, i.e., SINR< SINR₁, the base station can determine that the terminal cannot achieve complete beam correspondence but partial beam correspondence, so the base station starts assisting the terminal in transmit beam selection.

If the terminal has reported to the base station information on the number of SRSs required for auxiliary transmit beam selection, the base station can configure a corresponding amount of SRS resources for the terminal. If the terminal has not reported the number of SRSs required for auxiliary beam selection, the base station may configure as needed.

Then, the terminal transmits an SRS on multiple transmit beams, and the base station measures the signal, determines an optimal beam, and notifies the optimal beam to the terminal.

Based on the above embodiment, the terminal can transmit to the base station not only the SINR of the DL signal measured in the current channel condition, but also SINR₁ pre-stored in the terminal, and the base station can determine whether the current beam correspondence capability of the terminal is compatible with the partial beam correspondence capability initially reported based on the two SINRs, and whether to assist the terminal in beam selection, so that the terminal can always transmit a signal with the optimal transmit beam, thereby keeping the terminal performance unaffected. In addition, the waste of air interface resources can also be minimized and unnecessary system delay can be avoided.

Corresponding to the processing method in at least one embodiment applicable to a terminal device described above, a terminal device 100 is also provided in embodiments of the disclosure. Referring to FIG. 6, the terminal device 100 includes a first information transmitting module 110.

The first information transmitting module 110 is configured to transmit, by the terminal device, first information to a network device according to a current channel condition after the terminal device transmits beam correspondence capability information to the network device, where the first information is used for the network device to determine current beam correspondence capability of the terminal device.

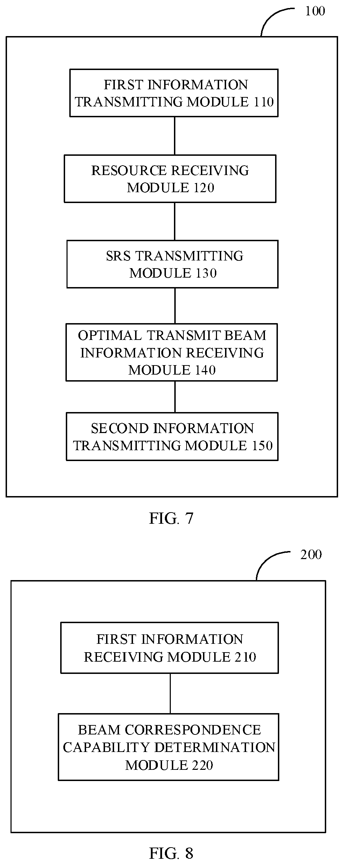

Optionally, referring to FIG. 7, in embodiments of the disclosure, the terminal device 100 further includes the first information transmitting module 110. The first information transmitting module 110 is configured to transmit the first information to the network device based on a measurement result of a DL signal in a current channel.

Optionally, in embodiments of the disclosure, the measurement result includes SINR of the DL signal.

Optionally, in embodiments of the disclosure, the beam correspondence capability information indicates that the terminal device has a first type of beam correspondence capability, and the first type of beam correspondence capability includes: the terminal device selecting a required UL transmit beam according to beam correspondence under a predefined channel condition.

Optionally, in embodiments of the disclosure, the beam correspondence capability information includes a first field, and a value of the first field is a first preset value.

Optionally, in embodiments of the disclosure, the first information includes a first request, and the first request is used to request the network device to start assisting the terminal device in beam selection. The first information transmitting module 110 is configured to transmit the first information to the network device when the SINR is less than a first reference value.

Optionally, in embodiments of the disclosure, the first information further includes a second request, and the second request is used to request the network device to stop assisting the terminal device in beam selection. The first information transmitting module 110 is configured to transmit the first information to the network device when the SINR is greater than or equal to a first reference value.

Optionally, in embodiments of the disclosure, the first information transmitting module 110 is configured to transmit the first information to the network device, where the first information includes the SINR

Optionally, in embodiments of the disclosure, the first information transmitting module 110 is configured to transmit the first information to the network device, where the first information includes the SINR and a first reference value.

Optionally, in embodiments of the disclosure, the beam correspondence capability information indicates that the terminal device has a second type of beam correspondence capability, and the second type of beam correspondence capability includes: the terminal device being unable to select a required UL transmit beam according to beam correspondence capability under a predefined channel condition.

Optionally, in embodiments of the disclosure, the beam correspondence capability information includes a first field, and a value of the first field is a second preset value.

Optionally, in embodiments of the disclosure, the first information includes a third request, and the third request is used to request the network device to stop assisting the terminal device in beam selection. The first information transmitting module 110 is configured to transmit the first information to the network device when the SINR is greater than or equal to a second reference value.

Optionally, in embodiments of the disclosure, the first information further includes a fourth request, and the fourth request is used to request the network device to start assisting the terminal device in beam selection. The first information transmitting module 110 is configured to transmit the first information to the network device when the SINR is less than a second reference value.

Optionally, in embodiments of the disclosure, transmitting, by the terminal device, the first information to the network device based on the measurement result includes: transmitting, by the terminal device, the first information to the network device, where the first information includes the SINR and a second reference value.

Optionally, in embodiments of the disclosure, the terminal device 100 further includes: a resource receiving module 120, an SRS transmitting module 130, and an optimal transmit beam information receiving module 140. The resource receiving module 120 is configured to receive multiple SRS resources configured by the network device. The SRS transmitting module 130 is configured to transmit, by the terminal device, multiple SRSs respectively on multiple transmit beams. The optimal transmit beam information receiving module 140 is configured to receive terminal optimal transmit beam information fed back by the network device.

Optionally, in embodiments of the disclosure, the terminal device 100 further includes a second information transmitting module 150. The second information transmitting module 150 is configured to transmit second information to the network device, where the second information includes an amount of SRS resources required by the terminal device for beam selection.

On the other hand, corresponding to the processing method in at least one embodiment applicable to a network device described above, a network device 200 is also provided in embodiments of the disclosure. Referring to FIG. 8, The network device 200 includes a first information receiving module 210 and a beam correspondence capability determination module 220.

The first information receiving module 210 is configured to receive first information from a terminal device after the network device receives beam correspondence capability information transmitted by the terminal device. The beam correspondence capability determination module 220 is configured to determine current beam correspondence capability of the terminal device according to the first information.

Optionally, in embodiments of the disclosure, the first information includes a first request, and the first request is used to request the network device to start assisting the terminal device in beam selection. The beam correspondence capability determination module 220 is configured to: determine that the current beam correspondence capability of the terminal device is a second type of beam correspondence capability in response to the first request in the first information.

Optionally, in embodiments of the disclosure, the first information includes a second request, and the second request is used to request the network device to stop assisting the terminal device in beam selection. The beam correspondence capability determination module 220 is configured to determine that the current beam correspondence capability of the terminal device is a first type of beam correspondence capability in response to the second request in the first information.

Optionally, in embodiments of the disclosure, the first information includes an SINR of a DL signal and a first reference value. The beam correspondence capability determination module 220 is configured to determine that the current beam correspondence capability of the terminal device is a first type of beam correspondence capability when the SINR is greater than or equal to the first reference value. The beam correspondence capability determination module 220 is configured to determine that the current beam correspondence capability of the terminal device is a second type of beam correspondence capability when the SINR is less than the first reference value.

Optionally, in embodiments of the disclosure, the first information includes an SINR of a DL signal. The beam correspondence capability determination module 220 is configured to determine that the current beam correspondence capability of the terminal device is a first type of beam correspondence capability when the SINR is greater than or equal to a second reference value. The beam correspondence capability determination module 220 is configured to determine that the current beam correspondence capability of the terminal device is a second type of beam correspondence capability when the SINR is less than the second reference value.

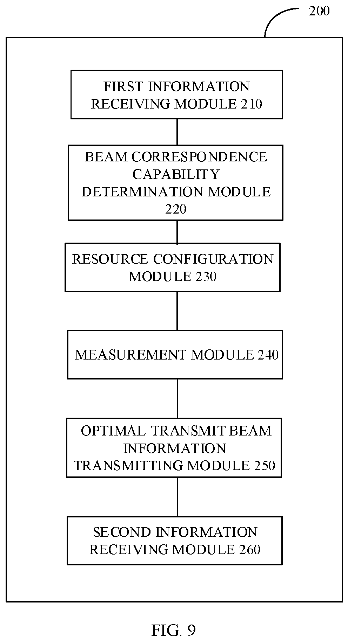

Optionally, referring to FIG. 9, in embodiments of the disclosure, the network device 200 further includes a resource configuration module 230, a measurement module 240, and an optimal transmit beam information transmitting module 250. The resource configuration module 230 is configured to: configure multiple SRS resources for the terminal device after the beam correspondence capability determination module 220 determines that the current beam correspondence capability of the terminal device is a second type of beam correspondence capability. The measurement module 240 is configured to measure multiple SRSs respectively transmitted by the terminal device on multiple beams. The optimal transmit beam information transmitting module 250 is configured to feed terminal optimal transmit beam information back to the terminal device according to a measurement result.

Optionally, in embodiments of the disclosure, the network device 200 further includes a second information receiving module 260 configured to receive second information from the terminal device before configuring the multiple SRS resources for the terminal device. The second information includes an amount of SRS resources required by the terminal device for beam selection. An amount of the multiple SRS resources configured by the network device for the terminal device is greater than or equal to the number of SRS resources in the second information.

Based on embodiments of the disclosure, the network device can determine whether the current beam correspondence capability of the terminal is compatible with the partial beam correspondence capability initially reported, so as to assist the terminal in beam selection when necessary, thereby keeping the terminal performance unaffected. In addition, the waste of air interface resources can also be minimized and unnecessary system delay can be avoided.

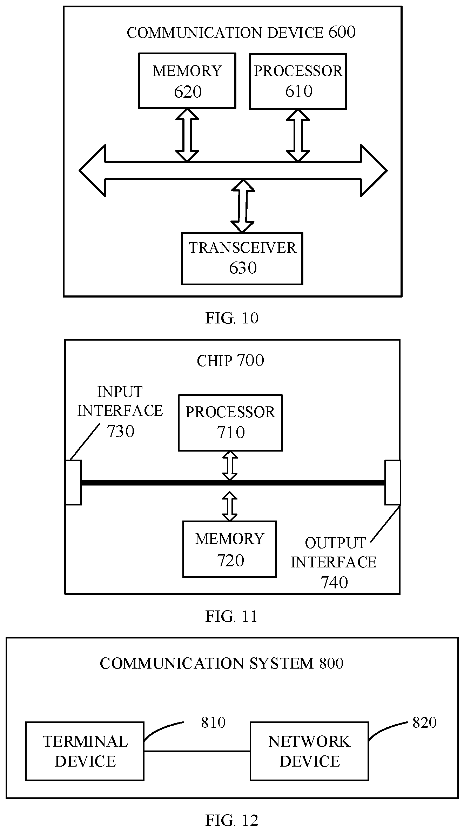

FIG. 10 is a schematic structural diagram of a communication device 600 according to embodiments of the disclosure. As illustrated in FIG. 10, the communication device 600 includes a processor 610. The processor 610 can invoke and execute computer programs stored in a memory to perform the method provided in embodiments of the disclosure.

Optionally, as illustrated in FIG. 10, the communication device 600 can further include the memory 620. The processor 610 can invoke and execute the computer programs stored in the memory 620 to perform the method provided in embodiments of the disclosure.

The memory 620 may be a separate device independent of the processor 610, or may be integrated into the processor 610.

Optionally, as illustrated in FIG. 10, the communication device 600 can further include a transceiver 630. The processor 610 can control the transceiver 630 to communicate with other devices, specifically, to transmit information or data to other devices, or to receive information or data from other devices.

The transceiver 630 may include a transmitter and a receiver. The transceiver 630 may further include an antenna, where one or more antennas can be provided.

Optionally, the communication device 600 may be the network device of embodiments of the disclosure, and the communication device 600 can implement the operations performed by the network device described in the foregoing method embodiments of the disclosure, which will not be repeated herein for simplicity.

Optionally, the communication device 600 may be the terminal device of embodiments of the disclosure, and the communication device 600 can implement the operations performed by the terminal device described in the foregoing method embodiments of the disclosure, which will not be repeated herein for simplicity.

FIG. 11 is a schematic structural diagram of a chip 700 according to embodiments of the disclosure. As illustrated in FIG. 7, the chip 700 includes a processor 710. The processor 710 is configured to invoke and execute computer programs stored in a memory to perform the method provided in embodiments of the disclosure.

Optionally, as illustrated in FIG. 11, the chip 700 further includes the memory 720. The processor 710 can invoke and execute the computer programs stored in the memory 720 to perform the method provided in embodiments of the disclosure.

The memory 720 may be a separate device independent of the processor 710, or may be integrated into the processor 710.

Optionally, the chip 700 may further include an input interface 730. The processor 710 can control the input interface 730 to communicate with other devices or chips, specifically, to acquire information or data transmitted by other devices or chips.

Optionally, the chip 700 may further include an output interface 740. The processor 710 can control the output interface 740 to communicate with other devices or chips, specifically, to output information or data to other devices or chips.

Optionally, the chip is applicable to the network device of embodiments of the disclosure. The chip can implement the operations performed by the network device described in the foregoing method embodiments of the disclosure, which will not be repeated herein for simplicity.

Optionally, the chip is applicable to the terminal device of embodiments of the disclosure. The chip can implement the operations performed by the terminal device described in the foregoing method embodiments of the disclosure, which will not be repeated herein for simplicity.

It should be understood that, the chip mentioned in embodiments of the disclosure may also be referred to as a system level chip, a system chip, a chip system, or on-chip system chip, etc.

The processor mentioned above may be a general-purpose processor, a digital signal processor (DSP), a field programmable gate array (FPGA), an application specific integrated circuit (ASIC), or other programmable logic devices, transistor logic devices, discrete hardware components, etc. The general-purpose processor mentioned above may be a microprocessor or any conventional processor or the like.

The memory mentioned above may be a volatile memory or a non-volatile memory, or may include both the volatile memory and the non-volatile memory. The non-volatile memory may be a read-only memory (ROM), a programmable read-only memory (PROM), an erasable PROM (EPROM), an electrically EPROM (EEPROM), or a flash memory. The volatile memory can be a random access memory (RAM).

It should be understood that, the above description of the memory is intended for illustration rather than limitation. For example, the memory of embodiments may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. In other words, the memory in embodiments of the disclosure is intended to include, but is not limited to, these and any other suitable types of memory.

FIG. 12 is a schematic block diagram of a communication system 800 according to embodiments of the disclosure. As illustrated in FIG. 12, the communication system 800 includes a terminal device 810 and a network device 820.

A method for beam selection is provided in embodiments of the disclosure. The method is applicable to a terminal device. Specifically, the terminal device transmits first information to a network device according to a current channel condition after the terminal device transmits beam correspondence capability information to the network device. The first information is used for the network device to determine current beam correspondence capability of the terminal device.

In addition, a method for beam selection is also provided in embodiments of the disclosure. The method is applicable to a network device. Specifically, the network device receives first information from a terminal device after the network device receives beam correspondence capability information reported by the terminal device. The network device determines current beam correspondence capability of the terminal device according to the first information.

The terminal device 810 may be configured to implement corresponding functions implemented by the terminal device in above methods, and the network device 820 may be configured to implement corresponding functions implemented by the network device in above methods, which will not be repeated herein for simplicity.

All or part of above embodiments may be implemented by software, hardware, firmware, or any combination thereof. When implemented by software, all or part of the embodiments can be implemented in the form of a computer program product. The computer program product includes one or more computer instructions. When the computer program instructions are loaded and executed on a computer, all or part of the operations or functions described in embodiments of the disclosure are performed. The computer may be a general-purpose computer, a special-purpose computer, a computer network, or other programmable apparatuses. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wire (e.g., a coaxial cable, an optical fiber, a digital subscriber line (DSL)) or wirelessly (e.g., via infrared, wireless, microwave, etc.). The computer-readable storage medium can be any computer accessible usable-medium or a data storage device such as a server, data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

It should be understood that, in various embodiments of the disclosure, magnitudes of sequence numbers of the operations are not intended to indicate an execution sequence and the execution sequence of the operations should be determined by their functions and internal logic and shall not form any limit to an embodiment process of embodiments of the disclosure.

It will be evident to those skilled in the art that, for the sake of convenience and simplicity, in terms of the working processes of the foregoing systems, apparatuses, and units, reference can be made to the corresponding processes of the above method embodiments, which will not be repeated herein.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method for beam selection, being applicable to a terminal device and comprising:
transmitting, by the terminal device, first information to a network device according to a current channel condition after the terminal device transmits beam correspondence capability information to the network device, the first information being used for the network device to determine current beam correspondence capability of the terminal device.

2. The method of claim 1, wherein transmitting, by the terminal device, the first information to the network device according to the current channel condition comprises:
transmitting, by the terminal device, the first information to the network device based on a measurement result of a downlink (DL) signal in a current channel.

3. The method of claim 2, wherein the measurement result comprises a signal to interference plus noise ratio (SINR) of the DL signal.

4. The method of claim 3, wherein the beam correspondence capability information indicates that the terminal device has a first type of beam correspondence capability, and the first type of beam correspondence capability comprises:
the terminal device selecting a required uplink (UL) transmit beam according to beam correspondence under a predefined channel condition.

5. The method of claim 3, wherein the beam correspondence capability information comprises a first field, and a value of the first field is a first preset value.

6. The method of claim 4 or 5, wherein the first information comprises a first request, the first request is used to request the network device to start assisting the terminal device in beam selection, and transmitting, by the terminal device, the first information to the network device based on the measurement result comprises:
transmitting, by the terminal device, the first information to the network device when the SINR is less than a first reference value.

7. The method of claim 4 or 5, wherein the first information comprises a second request, the second request is used to request the network device to stop assisting the terminal device in beam selection, and transmitting, by the terminal device, the first information to the network device based on the measurement result further comprises:
transmitting, by the terminal device, the first information to the network device when the SINR is greater than or equal to a first reference value.

8. The method of claim 4 or 5, wherein transmitting, by the terminal device, the first information to the network device based on the measurement result comprises:
transmitting, by the terminal device, the first information to the network device, wherein the first information comprises the SINR

9. The method of claim 4 or 5, wherein transmitting, by the terminal device, the first information to the network device based on the measurement result comprises:
transmitting, by the terminal device, the first information to the network device, wherein the first information comprises the SINR and a first reference value.

10. The method of claim 3, wherein the beam correspondence capability information indicates that the terminal device has a second type of beam correspondence capability, and the second type of beam correspondence capability comprises:
the terminal device being unable to select a required UL transmit beam according to beam correspondence capability under a predefined channel condition.

11. The method of claim 3, wherein the beam correspondence capability information comprises a first field, and a value of the first field is a second preset value.

12. The method of claim 10 or 11, wherein the first information comprises a third request, the third request is used to request the network device to stop assisting the terminal device in beam selection, and transmitting, by the terminal device, the first information to the network device based on the measurement result comprises:
transmitting, by the terminal device, the first information to the network device when the SINR is greater than or equal to a second reference value.

13. The method of claim 10 or 11, wherein the first information comprises a fourth request, the fourth request is used to request the network device to start assisting the terminal device in beam selection, and transmitting, by the terminal device, the first information to the network device based on the measurement result further comprises:
transmitting, by the terminal device, the first information to the network device when the SINR is less than a second reference value.

14. The method of claim 10 or 11, wherein transmitting, by the terminal device, the first information to the network device based on the measurement result comprises:
transmitting, by the terminal device, the first information to the network device, wherein the first information comprises the SINR and a second reference value.

15. The method of any of claims 1 to 14, further comprising:
receiving, by the terminal device, a plurality of sounding reference signal (SRS) resources configured by the network device;
transmitting, by the terminal device, a plurality of SRSs respectively on a plurality of transmit beams by using the SRS resources; and
receiving, by the terminal device, terminal optimal transmit beam information fed back by the network device.

16. The method of any of claims 1 to 15, further comprising:
transmitting, by the terminal device, second information to the network device, wherein the second information comprises an amount of SRS resources required by the terminal device for beam selection.

17. A method for beam selection, being applicable to a network device and comprising:
receiving, by the network device, first information from a terminal device after receiving beam correspondence capability information reported by the terminal device; and
determining, by the network device, current beam correspondence capability of the terminal device according to the first information.

18. The method of claim 17, wherein the first information comprises a first request, the first request is used to request the network device to start assisting the terminal device in beam selection, and determining, by the network device, the current beam correspondence capability of the terminal device according to the first information comprises:
determining, by the network device, that the current beam correspondence capability of the terminal device is a second type of beam correspondence capability in response to the first request in the first information.

19. The method of claim 17, wherein the first information comprises a second request, the second request is used to request the network device to stop assisting the terminal device in beam selection, and determining, by the network device, the current beam correspondence capability of the terminal device according to the first information comprises:
determining, by the network device, that the current beam correspondence capability of the terminal device is a first type of beam correspondence capability in response to the second request in the first information.

20. The method of claim 17, wherein the first information comprises a signal to interference plus noise ratio (SINR) of a downlink (DL) signal and a first reference value, and determining, by the network device, the current beam correspondence capability of the terminal device according to the first information comprises:
determining, by the network device, that the current beam correspondence capability of the terminal device is a first type of beam correspondence capability when the SINR is greater than or equal to the first reference value; or
determining, by the network device, that the current beam correspondence capability of the terminal device is a second type of beam correspondence capability when the SINR is less than the first reference value.

21. The method of claim 17, wherein the first information comprises an SINR of a DL signal, and determining the current beam correspondence capability of the terminal device according to the first information comprises:
determining, by the network device, that the current beam correspondence capability of the terminal device is a first type of beam correspondence capability when the SINR is greater than or equal to a second reference value; or
determining, by the network device, that the current beam correspondence capability of the terminal device is a second type of beam correspondence capability when the SINR is less than the second reference value.

22. The method of any of claims 17 to 21, further comprising:
after determining, by the network device, that the current beam correspondence capability of the terminal device is a second type of beam correspondence capability,
configuring, by the network device, a plurality of sounding reference signal (SRS) resources for the terminal device;
measuring, by the network device, a plurality of SRSs respectively transmitted by the terminal device on a plurality of beams; and
feeding, by the network device, terminal optimal transmit beam information back to the terminal device according to a measurement result.

23. The method of claim 22, further comprising:
before configuring, by the network device, the plurality of SRS resources for the terminal device,
receiving, by the network device, second information from the terminal device, wherein the second information comprises an amount of SRS resources required by the terminal device for beam selection, and an amount of the plurality of SRS resources configured by the network device for the terminal device is greater than or equal to the number of SRS resources in the second information.

24. A terminal device, comprising:
an information transmitting module configured to:
transmit, by the terminal device, first information to a network device according to a current channel condition after the terminal device transmits beam correspondence capability information to the network device, the first information being used for the network device to determine current beam correspondence capability of the terminal device.

25. A network device, comprising:
an information receiving module configured to:
receive first information from a terminal device after the network device receives beam correspondence capability information transmitted by the terminal device; and beam correspondence capability determination module configured to:
determine current beam correspondence capability of the terminal device according to the first information.

26. A terminal device, comprising:
a memory configured to store computer programs; and
a processor configured to invoke and execute the computer programs stored in the memory, to perform the method of any of claims 1 to 16.

27. A network device, comprising:
a memory configured to store computer programs; and
a processor configured to invoke and execute the computer programs stored in the memory, to perform the method of any of claims 17 to 23.

28. A chip, comprising:
a processor configured to invoke and execute computer programs stored in a memory, to cause a device equipped with the chip to perform the method of any of claims 1 to 16.

29. A chip, comprising:
a processor configured to invoke and execute computer programs stored in a memory, to cause a device equipped with the chip to perform the method of any of claims 17 to 23.

30. A computer-readable storage medium configured to store computer programs which are operable with a computer to perform the method of any of claims 1 to 16.

31. A computer-readable storage medium configured to store computer programs which are operable with a computer to perform the method of any of claims 17 to 23.

32. A computer program product comprising computer program instructions which are operable with a computer to perform the method of any of claims 1 to 16.

33. A computer program product comprising computer program instructions which are operable with a computer to perform the method of any of claims 17 to 23.

34. A computer program being operable with a computer to perform the method of any of claims 1 to 16.

35. A computer program being operable with a computer to perform the method of any of claims 17 to 23.

36. A communication system, comprising:
a terminal device configured to perform the method of any of claims 1 to 16; and
a network device configured to perform the method of any of claims 17 to 23.
